# EUROPEAN PATENT SPECIFICATION

(11) **EP 1 598 712 B1**
(45) Date of publication and mention of the grant of the patent: **31.08.2016**
(21) Application number: 05010111.2
(22) Date of filing: 10.05.2005
(51) Int. Cl.: G05B 13/02, C02F 3/00

(54) **Method and device for controlling the biological process in waste-water treatment plants**
Verfahren und Vorrichtung zur Steuerung eines biologischen Verfahren zur Abwasserbehandlung
Méthode et installation de contrôle de procédés biologiques dans le traitement des eaux

(30) Priority: 17.05.2004 IT MI20040977
(43) Date of publication of application: 23.11.2005
(73) Proprietor: Universita' degli studi di Brescia, 25121 Brescia (IT)
(72) Inventor: Baroni,Pietro c/oUniversita'degli studi di Brescia, 25121 Brescia (IT); Bertanza,Giorgio c/o Univ.'degli studi di Brescia, 25121 Brescia (IT); Collivignarelli, Carlo Uni.'degli studi di Brescia, 25121 Brescia (IT); Zambarda,Valerio c/o Univ.'degli studi di Brescia, 25121 Brescia (IT)
(74) Representative: Valentini, Giuliano

(56) References cited:
- EP-A- 1 376 276

## Description

The present invention relates in general to management of the biological process in waste water purifying plants and, in particular, a method and a device for continuous controlling the supply of oxygen in waste waters flowing in an oxidation tank.

In waste water purifying plants the main phase of treatment is represented by the biological process. In this phase the waste waters are made to flow in a large tank (several hundreds or thousands of cubic meters) containing a specific quantity of micro-organisms (bacteria, protozoa, etc.) which perform degradation of pollutants.

The principal phase of the biological treatment is aerobic, and it is consequently necessary to maintain a correct concentration of oxygen in the waste water in order to guarantee optimal operating conditions for the micro-organisms. This is obtained by supplying oxygen continuously (oxygen can be supplied by blowing air, blowing pure oxygen, remixing the sewage, etc.) to the waste water present inside the tank. This supply must be delivered in a particularly homogeneous way and in sufficient quantity to allow correct implementation of the purifying process.

In fact, the supply of oxygen has a considerable influence on various aspects of the treatment, such as the removal of nitrogen, the sedimentation of sludge, and the formation and/or growth of filamentous micro-organisms.

At the same time, the cost of energy for supplying oxygen through blown air is one of the major cost items in the management of a waste water purifying plant.

In prior art, regulation of the air fed to the biological treatment tank is generally based on detection of the concentration of dissolved oxygen (DO) in the waste water present in the treatment tank. The control system used consequently acts directly on the compressors (or machinery used to blow air) or on appropriate devices (such as valves) in order to vary or interrupt the air flow.

In general, in the more sophisticated known solutions, advanced systems are used for the supply of air, associated with industrial controllers of the PID type, for which a set point is set for a variable parameter, typically the concentration of dissolved oxygen. Nonetheless, it has been found that the dynamics of the treatment process are nonlinear and therefore difficult to control using a typically linear control device such as a PID.

In particular, one of the limits of PID controllers in this type of application depends on the process conditions, in which there are considerable variations in both the short and the long term and which have particular influence on the concentration of dissolved oxygen. Moreover, in particular conditions, there can be very wide fluctuations with respect to the set point.

Consequently, the efficiency of the biological process is compromised under various aspects. Firstly, the differences between the effective amount of oxygen required and the amount provided instantly are in any case counter-productive. In fact, if too little oxygen is supplied, the aerobic process is slowed down, while an excessive concentration of dissolved oxygen can, for example, have a negative influence on the efficiency of the denitrification process. Secondly, high fluctuations with respect to the pre-established set point make the purifying process instable due to the continuous and rapid variations in the concentration of dissolved oxygen to which the biomass is subjected.

EP-A1-1376276 discloses a system for controlling the treatment of waste waters according to the preamble of claim 1. A neural network and a back-propagation algorithm are used to control variable factors of the water, such as dissolved oxygen (DO), as a function of the characteristics of the water flowing into an exhalation tank. An air control valve is operated by the control system in order to regulate the value of the dissolved oxygen in the treated water.

Moreover, some researchers have shown the efficacy of controllers produced according to the rules of fuzzy logic to manage plants of this type. Nonetheless, this approach has until now been limited to an experimental level on reduced scale, where fluctuations of certain parameters involved in control are in any case limited, and without taking into account aspects undoubtedly more practical from the viewpoint of the actual management of real plants.

The Unites States patent no. US-6093322 (Bongards) describes an example of application of fuzzy logic to control this type of process. It is based on the measurement of the redox potential to define the times in which to switch on/switch off the aeration systems to perform an alternate nitrification and denitrification process.

A particutarly important aspect is represented by the waste of energy which occurs when the quantity of blown air is greater than the effective requirement. This aspect becomes more important if we consider the usual practice of maintaining high set points with regard to the concentration of dissolved oxygen, i.e., values suitable only when operating in the worst operating conditions, as it is in any case deemed that an excess supply of air is safer than a shortage in supply.

It should be taken into account that the cost of supplying air is, however, a substantial item (approximately 20-30%) of the overall management costs of a purifying plant.

This being stated, the general object of the present invention is to propose a method and a device which allow optimization of the supply of air to the aerobic treatment process for waste waters in a purifying plant.

A specific object of the present invention is to reduce treatment costs correlated principally to the supply of oxygen through blowing air, preventing, above all, an excess supply.

Another specific object of the present invention is to guarantee process stability, notwithstanding the variability of the characteristics and of the parameters which influence the treatment.

A further specific object of the present invention is to maintain adequate treatment efficiency at all times.

These objects are attained by the present invention, which relates to a method for continuously controlling the aerobic biological treatment of waste waters according to claim 1.

Preferably, the first control level modifies the set point of the concentration of dissolved oxygen in the waste waters as a function of at least the value of concentration of ammonia nitrogen detected in the waste waters and of at least a desired value for the concentration of ammonia nitrogen.

By varying the set point of the concentration of dissolved oxygen as a function of the variations in the process parameters effectively detected, preferably measured "on-line", it is possible to obtain noteworthy process stability, both in the short and in the long term.

Calculation of a new set point for the concentration of dissolved oxygen is implemented very frequently with respect to the dynamics of the processes in play, for example, at least every 10-20 minutes, so as to guarantee substantially continuous control of the process also for variations in the parameters that can occur in the short term.

According to an advantageous aspect of the present invention, the first level of control uses fuzzy logic rules, through which membership functions are expressed at least for the difference between detected and desired value of the concentration of ammonia nitrogen, membership functions are expressed at least for the variation speed of the concentration of ammonia nitrogen and membership functions are expressed at least for the percentage variation of the set point for the concentration of dissolved oxygen.

According to another advantageous aspect of the present invention, at least a second control level is provided to modify in a substantially continuous way the flow rate of air blown into the oxidation tank as a function of the set point of the concentration of dissolved oxygen calculated in a substantially continuous way by the first control level and of the value effectively detected for the concentration of dissolved oxygen in the waste waters.

Also in this second control level fuzzy logic rules are preferably used. In this case, the fuzzy logic rules express membership functions at least for the difference between detected value and set point of the concentration of dissolved oxygen, membership functions at least for the variation speed of the concentration of dissolved oxygen and membership functions at least for the variation of the flow rate of air blown into the tank.

The invention also relates to a device for continuously controlling the aerobic biological treatment of waste waters according to claim 8.

In general, it has been found in a practical way that the principles of the present invention, especially those relating to the substantially continuous variation of the set point for the concentration of dissolved oxygen, allow considerably savings to be obtained in the management of purifying plants, by appropriately optimizing the consumption of electrical energy used to supply air to the oxidation tanks.

The adoption of fuzzy logic rules also facilitates control for experts in the environmental field without requiring particular know-how in the field of control systems.

Further characteristics and advantages of the present invention shall be more apparent from the description hereunder with reference to the accompanying drawings wherein:
- Figure 1 is a general diagram of a control device according to the present invention applied to a waste water purifying plant;
- Figure 2 is a diagram illustrating operation of the first control module of a device according to the present invention; and
- Figure 3 is a diagram illustrating operation of the second control module of a device according to the present invention.

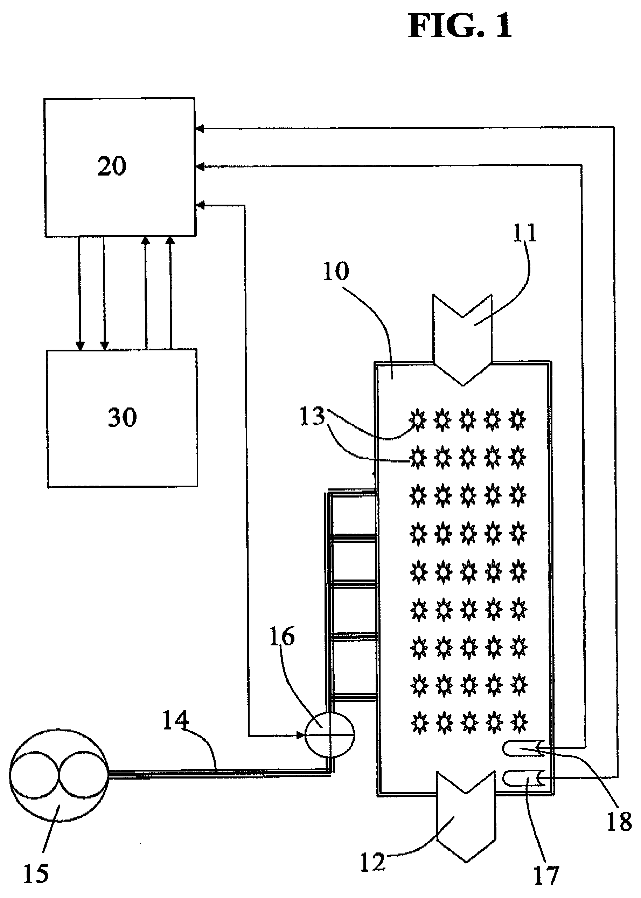

The diagram in Figure 1 shows a tank 10 including at least one inlet 11 for inflowing waste water and one or more outlets 12 for outflowing waste water. Pressurized air is blown into the tank 10, and consequently into the waste water travelling therethrough, by a network of nozzles 13 fed by a main duct 14. Air is blown into the duct 14 by at least one compressor or fan 15 and the flow rate of the air to the network of nozzles 13 is regulated by at least one regulation device 16.

Detectors are provided for the process parameters, in particular at least one sensor 17 to measure the concentration of ammonia nitrogen in the waste water and at least one sensor 18 to measure the concentration of dissolved oxygen in the waste water.

The signals representing the values acquired on-line by the detectors 17 and 18 are sent to a unit 20 for the management of input and output signals to and from the control unit 30.

The control unit 30 is, for example, composed of a computer programmed to perform all the instructions required to implement the fuzzy logic rules used in the process control, including transformation (defuzzification) of the results obtained by applying the fuzzy logic rules to control values and/or signals destined to be sent to the regulation device 16.

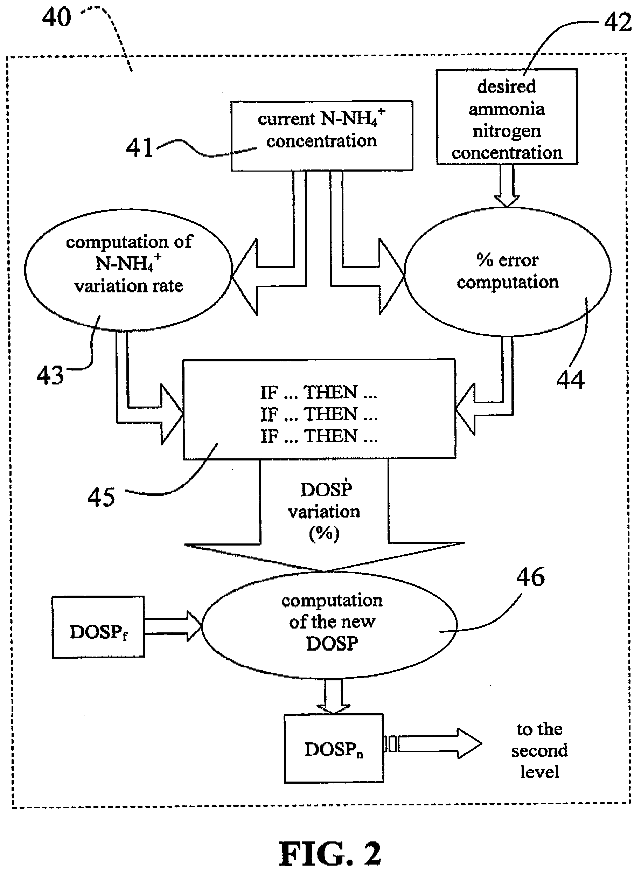

Referring now also to Figure 2, a first control level or module 40 is provided, which receives an input value 41 corresponding to the concentration of ammonia nitrogen detected by the sensor 17 and a pre-established value 42 corresponding to the concentration of ammonia nitrogen desired.

The first value 41 is used to calculate the variation rate of the concentration of ammonia nitrogen along a pre-established time interval (block 43), and both values 41 and 42 are used to calculate the percentage error between the desired value and the value effectively detected (block 44).

The results of the calculations performed in the blocks 43 and 44 are presented as input parameters to a program 45 which uses the fuzzy logic rules to calculate any variation in the percentage of the DOSP (Dissolved Oxygen Set Point), compared to the previously calculated value.

The MacVicar-Whelan rule bases are, for example, used. An example of a rule of this type applied in this context could be:
IF *nitrification is* "*low*"
AND *the variation rate is "small positive"*
THEN *the variation in DOSP is "high positive"*

The membership functions can, for example, be defined on the basis of Gaussian, trapezoidal or similar functions.

In general, the fuzzy logic rules implemented in the program 45 can, for example, express membership functions for the difference between the detected and desired value of the concentration of ammonia nitrogen, membership functions for the variation speed of the concentration of ammonia nitrogen, and membership functions for the percentage variation of the set point of the concentration of dissolved oxygen.

The percentage value output from the program 45, together with the previous DOSP_{f} value, is used to calculate the new set point value DOSPₙ for the concentration of dissolved oxygen (block 46) which will be used as the basis for varying the supply of air in the waste water flowing inside the tank 10.

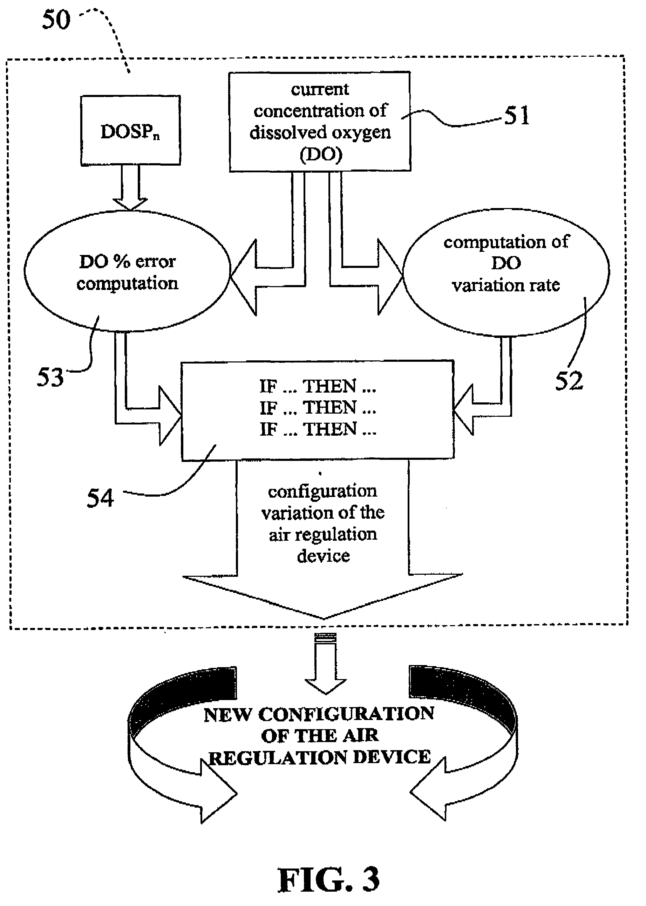

In fact, the DOSPₙ value output from the first level 40 is input into a second level or module 50 represented in Figure 3.

Besides the DOSPₙ value, the module 50 also receives an input value 51 corresponding to the current concentration of dissolved oxygen detected by the sensor 18.

The value 51 is used to calculate the variation rate of the concentration of dissolved oxygen along a pre-established time interval (block 52). At the same time, the DOSPₙ value is used together with the value 51 to calculate the percentage error between the DOSPₙ value and the value effectively detected (block 53).

The results of the calculations implemented in the blocks 52 and 53 are presented as input parameters to a program 54 which also uses fuzzy logic rules to determine any operation of the regulation device 16 in order to vary the supply of air according to the parameters established by the control device.

The signal corresponding to this value is then transmitted to the regulation device 16 through the unit 20 dedicated to management of the input and output signals of the unit 30 (Figure 1).

Also in the case of the program 54 MacVicar-Whelan type fuzzy logic base rules are, for example, used. An example of a rule of this type applied in this context could be:
IF *the difference between current DO and DOSP is "small negative"*
AND *the variation rate is "high positive"*
THEN *the variation of the flow rate is "small negative"*

Also in this case the membership functions can, for example, be defined on the basis of Gaussian, trapezoidal or similar functions.

In general, the fuzzy logic rules implemented in the program 54 can, for example, express membership functions for the difference between the detected value and the calculated set point of the concentration of dissolved oxygen, membership functions for the variation speed of the concentration of dissolved oxygen, and membership functions for the variation of the air flow.

### EXPERIMENTAL RESULTS

A control system according to the present invention was experimented in a plant which on average treats 85,000 m³/day of waste waters prevalently of domestic origin.

The compartment in which the aerobic purifying process takes place is composed of four tanks in parallel. One of the tanks was subjected to control by a device according to the present invention, while in the other three tanks the existing system was left, i.e. a system with a PID controller with a fixed set point with regard to the concentration of dissolved oxygen.

As a whole, the air feed system is composed of three centrifugal compressors, each having a maximum flow rate of 12,100 Nm³/hour, with a controlled valve for each tank, for separate regulation of the air flow.

Large variations in the air requirements are managed by switching on and off one or more compressors, while smaller variations are obtained by regulating internal devices present in each compressor. Management is, in this case, performed by a PID controller provided to maintain the pressure in the air circuit at a pre-established constant value (generally of 4.8 m H₂O).

Two oxygen sensors were installed in proximity to the outlet of each tank and the current value of the concentration of dissolved oxygen is calculated as an average of the measurements detected by each of the two sensors.

In the conventional control system, the value detected for the concentration of dissolved oxygen is input into the PID controller. This controller has the task of maintaining this value as close as possible to the set point pre-established for the concentration of dissolved oxygen in a specific tank, in particular acting on a controlled valve associated with the corresponding tank.

The control according to the present invention was instead applied calculating the set point for the concentration of dissolved oxygen every 15 minutes. The rate of variation of the concentration of ammonia nitrogen is calculated on the values relative to the last 30 minutes, while the rate of variation of the concentration of dissolved oxygen is calculated on the basis of the values relative to the last 12 minutes.

The variation of the position of the controlled valve is calculated every minute. A butterfly valve with a diameter of 250 mm coupled to an electric servomotor for regulation, with gear reducer complete with local position indicator, is used.

The sensors for detecting the concentration of ammonia nitrogen and the concentration of dissolved oxygen are products identified by the trade names FILTRAX, AMTAX and ANALON DO-1 produced by the company DR LANGE s.r.l. of Rozzano (MI).

Interface between the sensors and the control logic is obtained using STAR-OHF (32 bit CPU), ADA and DOB boards produced by the company SDI AUTOMAZIONE INDUSTRIALE of Trezzano sul Naviglio (MI).

Experimentation was carried out for a period of approximately one year on the "Città di Verona" purifying plant located in Verona and managed by the company AGSM Verona S.p.A., with continuous comparison with the results determined by conventional controllers.

The value of 7.0 mg of NH₄⁺/litre was established as desired value for the concentration of ammonia nitrogen, in particular taking account of the expected variations around this value of reference, but nonetheless considerably lower than the limit established by law for this purifying plant of 15 mg of NH₄⁺/litre.

In particularly critical conditions, i.e. in days with a particularly high load, with conventional (PID) controllers, the concentration of ammonia was found to vary by approximately 0 to approximately 10 mg N/litre over the course of one day, while with the controller of the present invention concentrations varying from 4.3 to 8.9 mg N/litre were detected.

On average, in the course of one day, the value of difference between the maximum and minimum concentration of ammonia nitrogen with the controller according to the present invention is approximately 6.5 mg N/litre, while with convention controllers the mean value calculated is approximately 9.9 mg N/litre. A reduction of the amplitude of fluctuation of approximately 34% is obtained, which is a considerable improvement both as regards process efficiency, as extreme situations of poor or complete nitrification must be avoided, and as regards stability on a daily scale.

Even in less critical conditions, i.e. with a normal or slightly increased load with respect to the maximum load of the plant, conventional controllers maintained the concentration of ammonia at very low values, i.e. approximately 0.5 mg N/litre, while with the controller of the present invention the values varied from 1.7 to 7.3 mg N/litre.

The mean values were of approximately 1.3 mg N/litre with conventional controllers and of approximately 5.2 mg N/litre with a controller according to the present invention. This means that in limited load conditions, a fixed set point for the concentration of dissolved oxygen gives rise to an excess supply of air which practically cancels the concentration of ammonia nitrogen, resulting in a considerable waste of energy. On the contrary, the control produced according to the present invention, with variable set point for the concentration of dissolved oxygen, maintains the value of concentration of ammonia nitrogen stable close to the desired level, therefore without requesting a pointless supply of air with consequent waste of energy.

The controller according to the present invention ensures that the concentration of dissolved oxygen present in the waste waters regularly follows the variation of the set point, with limited fluctuations, while with conventional controllers fluctuations much higher than the fixed set point occur. In particular, the maximum difference between the effective value measured for the concentration of dissolved oxygen and the set point was 0.5 mg N/litre, while for conventional controllers it was 0.86 mgN/litre.

Another considerable advantage was found in terms of energy consumption. Comparison was made by applying alternatively in time a completely conventional control method (first method) and a mixed control method, with only one of the four tanks controlled according to the present invention (second method).

With the first operating method, a consumption of 16,491 kWh/day was obtained, while with the second operating method consumption was of 15,738 kWh/day, thereby obtaining a saving of approximately 4.5% with only one of the tanks controlled according to the present invention. It is therefore right to expect further savings by applying the control according to the present invention to all the tanks in the biological compartment of the plant.

## Claims

1. A method for continuously controlling the aerobic biological treatment of waste waters in a purifying plant, wherein said waste waters flowing continuously in an oxidation tank (10) are subjected to aeration through the blowing of pressurized air, wherein the flow rate of air blown into the waste water is substantially continuously regulated by at least one first control level (40) which substantially continuously modifies the set point of the concentration of dissolved oxygen (DOSP) in the waste waters, **characterized in that** said first control level (40) uses fuzzy logic rules in order to determine each new set point of the concentration of dissolved oxygen (DOSP) as a function of at least the value of concentration of ammonia nitrogen detected in the waste waters and of at least a desired value for the concentration of ammonia nitrogen.

2. The method according to claim 1, wherein at least the values of the concentration of ammonia nitrogen and of the concentration of dissolved oxygen (DOSP) in said waste waters are detected.

3. The method according to claim 1, wherein said first control level (40) modifies the set point of the concentration of dissolved oxygen (DOSP) in said waste waters as a function at least of the value of the concentration of ammonia nitrogen detected in said waste waters and at least of said pre-established value for the concentration of ammonia nitrogen.

4. The method according to claim 1, wherein said fuzzy logic rules express membership functions at least for the difference between detected and desired value of the concentration of ammonia nitrogen, membership functions at least for the variation speed of the concentration of ammonia nitrogen and membership functions at least for the percentage variation of the set point for the concentration of dissolved oxygen (DOSP).

5. The method according to claim 1, wherein at least one second control level (50) is provided to modify in a substantially continuous way the flow rate of air blown into said waste waters as a function of the set point of the concentration of dissolved oxygen (DOSP) calculated in a substantially continuous way by said first control level (40) and of the value detected for the concentration of dissolved oxygen (DO) in said waste waters.

6. The method according to claim 5, wherein said second control level (50) uses fuzzy logic rules.

7. The method according to claim 6, wherein said fuzzy logic rules express membership functions at least for the difference between detected value and set point of the concentration of dissolved oxygen (DOSP), membership functions at least for the variation speed of the concentration of dissolved oxygen (DO) and membership functions at least for the variation of the flow rate of air blown into said waster waters.

8. A device for continuously controlling the aerobic biological treatment of waste waters in a purifying plant, including at least one system (13, 14, 15, 16) for blowing pressurized air into the waste waters flowing continuously in an oxidation tank (10) and control means (20, 30) to vary, in a substantially continuous way, the flow rate of air blown into said waste waters, wherein said control means (20, 30) include at least one first control module (40) which substantially continuously modifies the set point of the concentration of dissolved oxygen (DOSP) in said waste waters, **characterized in that** said first control module (40) includes at least one processing unit programmed with fuzzy logic rules in order to determine each new set point of the concentration of dissolved oxygen (DOSP) as a function of at least the value of concentration of ammonia nitrogen detected in the waste waters and of at least a desired value for the concentration of ammonia nitrogen.

9. The device according to claim 8, wherein means (17, 18) are provided to detect at least the values relative to the concentration of ammonia nitrogen and to the concentration of dissolved oxygen (DO) in said waste waters.

10. The device according to claim 8, wherein said first control module (40) is programmed to modify the set point of the concentration of dissolved oxygen (DOSP) in said waste waters as a function of at least the value detected for the concentration of ammonia nitrogen and of said pre-established value for the concentration of ammonia nitrogen in said waste waters.

11. The device according to claim 8, wherein said fuzzy logic rules express membership functions at least for the difference between the detected and desired value of the concentration of ammonia nitrogen, membership functions at least for the variation speed of the concentration of ammonia nitrogen, and membership functions at least for the percentage variation of the set point of the concentration of dissolved oxygen (DOSP).

12. The device according to claim 8, wherein said control means (20, 30) include at least one second control module (50) to modify in a substantially continuous way the flow rate of air blown into said waste waters as a function of the set point of the concentration of dissolved oxygen (DOSP) calculated in a substantially continuous way by said first control module (40) and of the value effectively detected of the concentration of dissolved oxygen (DO) in said waste waters.

13. The device according to claim 12, wherein said second control module (50) includes at least one processing unit programmed with fuzzy logic rules.

14. The device according to claim 13, wherein said fuzzy logic rules express membership functions at least for the difference between detected value and set point of the concentration of dissolved oxygen (DOSP), membership functions at least for the variation speed of the concentration of dissolved oxygen (DO) and membership functions at least for the variation of the flow rate of air blown into said waster waters.

## Patentansprüche

1. Verfahren zur kontinuierlichen Steuerung der aeroben biologischen Behandlung von Abwässern in einer Reinigungsanlage, wobei die kontinuierlich in einen Oxidationsbehälter (10) fließenden Abwässer einer Belüftung durch das Einblasen von Druckluft unterzogen werden, wobei die Strömungsgeschwindigkeit der in das Abwasser eingeblasenen Luft im Wesentlichen kontinuierlich durch mindestens eine erste Steuerebene (40) reguliert wird, die im Wesentlichen kontinuierlich den Sollwert der Konzentration von gelöstem Sauerstoff (DOSP) in den Abwässern modifiziert, **dadurch gekennzeichnet, dass** die erste Steuerebene (40) Fuzzy-Logik-Regeln verwendet, um jeden neuen Sollwert der Konzentration von gelöstem Sauerstoff (DOSP) als eine Funktion von mindestens dem Wert der Konzentration von Ammoniumstickstoff, welche in den Abwässern gemessen wird, und von mindestens einem gewünschten Wert für die Konzentration von Ammoniumstickstoff zu bestimmen.

2. Vorrichtung gemäß Anspruch 1, wobei mindestens die Werte der Konzentration von Ammoniumstickstoff und der Konzentration von gelöstem Sauerstoff (DOSP) in den Abwässern gemessen werden.

3. Verfahren gemäß Anspruch 1, wobei die erste Steuerebene (40) den Sollwert der Konzentration von gelöstem Sauerstoff (DOSP) in den Abwässern als eine Funktion von mindestens dem Wert der Konzentration von Ammoniumstickstoff, welche in den Abwässern gemessen wird, und mindestens von dem vorher festgesetzten Wert für die Konzentration von Ammoniumstickstoff modifiziert.

4. Verfahren gemäß Anspruch 1, wobei die Fuzzy-Logik-Regeln Zugehörigkeitsfunktionen mindestens für die Differenz zwischen dem gemessenen und dem gewünschten Wert der Konzentration von Ammoniumstickstoff, Zugehörigkeitsfunktionen mindestens für die Änderungsgeschwindigkeit der Konzentration von Ammoniumstickstoff und Zugehörigkeitsfunktionen mindestens für die prozentuale Veränderung des Sollwertes für die Konzentration von gelöstem Sauerstoff (DOSP) ausdrücken.

5. Verfahren gemäß Anspruch 1, wobei mindestens eine zweite Steuerebene (50) bereitgestellt ist, um die Strömungsgeschwindigkeit der in die Abwässer geblasenen Luft in einer im Wesentlichen kontinuierlichen Weise als eine Funktion des Sollwertes der Konzentration von gelöstem Sauerstoff (DOSP), die in einer im Wesentlichen kontinuierlichen Weise durch die erste Steuerebene (40) berechnet wird, und des Wertes, welcher für die Konzentration von gelöstem Sauerstoff (DO) in den Abwässern gemessen wird, zu modifizieren.

6. Verfahren gemäß Anspruch 5, wobei die zweite Steuerebene (50) Fuzzy-Logik-Regeln verwendet.

7. Verfahren gemäß Anspruch 6, wobei die Fuzzy-Logik-Regeln Zugehörigkeitsfunktionen mindestens für die Differenz zwischen dem gemessenen Wert und dem Sollwert der Konzentration von gelöstem Sauerstoff (DOSP), Zugehörigkeitsfunktionen mindestens für die Änderungsgeschwindigkeit der Konzentration von gelöstem Sauerstoff (DO) und Zugehörigkeitsfunktionen mindestens für die Veränderung der Strömungsgeschwindigkeit der in die Abwässer geblasenen Luft ausdrücken.

8. Vorrichtung für die kontinuierliche Steuerung der aeroben biologischen Behandlung von Abwässern in einer Reinigungsanlage, umfassend mindestens ein erstes System (13, 14, 15, 16) zum Einblasen von Druckluft in die Abwässer, welche kontinuierlich in einen Oxidationsbehälter (10) fließen, und Steuerungsmittel (20, 30) zum Verändern, in einer im Wesentlichen kontinuierlichen Weise, der Strömungsgeschwindigkeit der in die Abwässer geblasenen Luft, wobei die Steuerungsmittel (20, 30) mindestens ein erstes Steuermodul (40) umfassen, welches im Wesentlichen kontinuierlich den Sollwert der Konzentration von gelöstem Sauerstoff (DOSP) in den Abwässern modifiziert, **dadurch gekennzeichnet, dass** das erste Steuermodul (40) mindestens eine Verarbeitungseinheit umfasst, die mit Fuzzy-Logik-Regeln programmiert ist, um jeden neuen Sollwert der Konzentration von gelöstem Sauerstoff (DOSP) als eine Funktion von mindestens dem Wert der Konzentration von Ammoniumstickstoff, welche in den Abwässern gemessen wird, und von mindestens einem gewünschten Wert für die Konzentration von Ammoniumstickstoff zu bestimmen.

9. Vorrichtung gemäß Anspruch 8, wobei Mittel (17, 18) bereitgestellt sind, um mindestens die Werte relativ zu der Konzentration von Ammoniumstickstoff und zu der Konzentration von gelöstem Sauerstoff (DO) in den Abwässern zu messen.

10. Vorrichtung gemäß Anspruch 8, wobei das erste Steuermodul (40) programmiert ist, um den Sollwert der Konzentration von gelöstem Sauerstoff (DOSP) in den Abwässern als eine Funktion von mindestens dem Wert, welcher für die Konzentration von Ammoniumstickstoff gemessen wird, und von dem vorher festgesetzten Wert für die Konzentration von Ammoniumstickstoff in den Abwässern zu modifizieren.

11. Vorrichtung gemäß Anspruch 8, wobei die Fuzzy-Logik-Regeln Zugehörigkeitsfunktionen mindestens für die Differenz zwischen dem gemessenen und dem gewünschten Wert der Konzentration von Ammoniumstickstoff, Zugehörigkeitsfunktionen mindestens für die Änderungsgeschwindigkeit der Konzentration von Ammoniumstickstoff und Zugehörigkeitsfunktionen mindestens für die prozentuale Veränderung des Sollwertes der Konzentration von gelöstem Sauerstoff (DOSP) ausdrücken.

12. Vorrichtung gemäß Anspruch 8, wobei die Steuerungsmittel (20, 30) mindestens ein zweites Steuermodul (50) umfassen, um die Strömungsgeschwindigkeit der in die Abwässer geblasenen Luft in einer im Wesentlichen kontinuierlichen Weise als eine Funktion des Sollwertes der Konzentration von gelöstem Sauerstoff (DOSP), welche in einer im Wesentlichen kontinuierlichen Weise durch das erste Steuermodul (40) berechnet wird, und des Wertes, welcher effektiv von der Konzentration von gelöstem Sauerstoff (DO) in den Abwässern gemessen wird, zu modifizieren.

13. Vorrichtung gemäß Anspruch 12, wobei das zweite Steuermodul (50) mindestens eine Verarbeitungseinheit umfasst, die mit Fuzzy-Logik-Regeln programmiert ist.

14. Vorrichtung gemäß Anspruch 13, wobei die Fuzzy-Logik-Regeln Zugehörigkeitsfunktionen mindestens für die Differenz zwischen dem gemessenen Wert und dem Sollwert der Konzentration von gelöstem Sauerstoff (DOSP), Zugehörigkeitsfunktionen mindestens für die Änderungsgeschwindigkeit der Konzentration von gelöstem Sauerstoff (DO) und Zugehörigkeitsfunktionen mindestens für die Veränderung der Strömungsgeschwindigkeit der in die Abwässer geblasenen Luft ausdrücken.

## Revendications

1. Procédé de contrôle en continu du traitement biologique aérobie d'eaux usées dans une installation d'épuration, dans lequel lesdites eaux usées circulant en continu dans un réservoir d'oxydation (10) sont soumises à une aération par l'intermédiaire du soufflage d'air sous pression, dans lequel le débit de l'air soufflé dans les eaux usées est régulé pratiquement en continu par au moins un premier niveau de contrôle (40) qui modifie pratiquement en continu le point de consigne de la concentration en oxygène dissous (DOSP) dans les eaux usées, **caractérisé en ce que** ledit premier niveau de contrôle (40) utilise des règles logiques floues afin de déterminer chaque nouveau point de consigne de la concentration en oxygène dissous (DOSP) en fonction d'au moins la valeur de la concentration en azote ammoniacal détecté dans les eaux usées et d'au moins une valeur souhaitée pour la concentration en azote ammoniacal.

2. Procédé selon la revendication 1, dans lequel sont détectées au moins les valeurs de la concentration en azote ammoniacal et de la concentration en oxygène dissous (DOSP) dans lesdites eaux usées.

3. Procédé selon la revendication 1, dans lequel ledit premier niveau de contrôle (40) modifie le point de consigne de la concentration en oxygène dissous (DOSP) dans lesdites eaux usées en fonction d'au moins la valeur de la concentration en azote ammoniacal détecté dans lesdites eaux usées et d'au moins ladite valeur pré-établie pour la concentration en azote ammoniacal.

4. Procédé selon la revendication 1, dans lequel lesdites règles logiques floues expriment des fonctions d'appartenance au moins pour la différence entre la valeur détectée et la valeur souhaitée de la concentration en azote ammoniacal, des fonctions d'appartenance au moins pour la vitesse de variation de la concentration en azote ammoniacal et des fonctions d'appartenance au moins pour la variation en pourcentage du point de consigne pour la concentration en oxygène dissous (DOSP).

5. Procédé selon la revendication 1, dans lequel au moins un second niveau de contrôle (50) est prévu pour modifier de manière pratiquement en continu le débit de l'air soufflé dans les eaux usées en fonction du point de consigne de la concentration en oxygène dissous (DOSP) calculé de manière pratiquement en continu par ledit premier niveau de contrôle (40) et de la valeur détectée pour la concentration en oxygène dissous (DO) dans lesdites eaux usées.

6. Procédé selon la revendication 5, dans lequel ledit second niveau de contrôle (50) utilise des règles logiques floues.

7. Procédé selon la revendication 6, dans lequel lesdites règles logiques floues expriment des fonctions d'appartenance au moins pour la différence entre la valeur détectée et le point de consigne de la concentration en oxygène dissous (DOSP), des fonctions d'appartenance au moins pour la vitesse de variation de la concentration en oxygène dissous (DO) et des fonctions d'appartenance au moins pour la variation du débit de l'air soufflé dans lesdites eaux usées.

8. Dispositif pour le contrôle en continu du traitement biologique aérobie d'eaux usées dans une installation d'épuration, comprenant au moins un système (13, 14, 15, 16) destiné à souffler de l'air sous pression dans les eaux usées circulant en continu dans un réservoir d'oxydation (10) et des moyens de contrôle (20, 30) destinés à varier, de manière pratiquement en continu, le débit de l'air soufflé dans lesdites eaux usées, dans lequel lesdits moyens de contrôle (20, 30) comprennent au moins un premier module de contrôle (40) qui modifie pratiquement en continu le point de consigne de la concentration en oxygène dissous (DOSP) dans lesdites eaux usées, **caractérisé en ce que** ledit premier module de contrôle (40) comprend au moins une unité de traitement programmée avec des règles logiques floues afin de déterminer chaque nouveau point de consigne de la concentration en oxygène dissous (DOSP) en fonction d'au moins la valeur de la concentration en azote ammoniacal détecté dans les eaux usées et d'au moins une valeur souhaitée pour la concentration en azote ammoniacal.

9. Dispositif selon la revendication 8, dans lequel les moyens (17, 18) sont prévus pour détecter au moins les valeurs relatives à la concentration en azote ammoniacal et à la concentration en oxygène dissous (DO) dans lesdites eaux usées.

10. Dispositif selon la revendication 8, dans lequel ledit premier module de contrôle (40) est programmé pour modifier le point de consigne de la concentration en oxygène dissous (DOSP) dans lesdites eaux usées en fonction d'au moins la valeur détectée pour la concentration en azote ammoniacal et d'au moins ladite valeur pré-établie pour la concentration en azote ammoniacal dans lesdites eaux usées.

11. Dispositif selon la revendication 8, dans lequel lesdites règles logiques floues expriment des fonctions d'appartenance au moins pour la différence entre la valeur détectée et la valeur souhaitée de la concentration en azote ammoniacal, des fonctions d'appartenance au moins pour la vitesse de variation de la concentration en azote ammoniacal, et des fonctions d'appartenance au moins pour la variation en pourcentage du point de consigne de la concentration en oxygène dissous (DOSP).

12. Dispositif selon la revendication 8, dans lequel lesdits moyens de contrôle (20, 30) comprennent au moins un second module de contrôle (50) destiné à modifier de manière pratiquement en continu le débit de l'air soufflé dans lesdites eaux usées en fonction du point de consigne de la concentration en oxygène dissous (DOSP) calculé de manière pratiquement en continu par ledit premier module de contrôle (40) et de la valeur effectivement détectée de la concentration en oxygène dissous (DO) dans lesdites eaux usées.

13. Dispositif selon la revendication 12, dans lequel ledit second module de contrôle (50) comprend au moins une unité de traitement programmée avec des règles logiques floues.

14. Dispositif selon la revendication 13, dans lequel lesdites règles logiques floues expriment des fonctions d'appartenance au moins pour la différence entre la valeur détectée et le point de consigne de la concentration en oxygène dissous (DOSP), des fonctions d'appartenance au moins pour la vitesse de variation de la concentration en oxygène dissous (DO) et des fonctions d'appartenance au moins pour la variation du débit de l'air soufflé dans lesdites eaux usées.
